Europäisches Patentamt

European Patent Office

Office européen des brevets

(19)

(11) Numéro de publication : **0 365 386 B1**

(12) **FASCICULE DE BREVET EUROPEEN**

(45) Date de publication du fascicule du brevet :
**16.12.92 Bulletin 92/51**

(51) Int. Cl.$^5$ : **B29C 59/16, C08J 7/06**

(21) Numéro de dépôt : **89402680.6**

(22) Date de dépôt : **29.09.89**

(54) **Procédé pour rendre une glace en matière plastique résistante à l'ábrasion et glace en matière plastique rendue résistante à l'ábrasion.**

(30) Priorité : **07.10.88 FR 8813151**

(43) Date de publication de la demande :
**25.04.90 Bulletin 90/17**

(45) Mention de la délivrance du brevet :
**16.12.92 Bulletin 92/51**

(84) Etats contractants désignés :
**DE ES FR GB IT**

(56) Documents cités :
**FR-A- 2 332 313**
**GB-A- 2 105 729**
**US-A- 4 718 905**
**US-A- 4 743 493**

(56) Documents cités :
**Japanese Patent Gasette, Section Ch,
Semaine 8825, 3 Août 1988, Derwent Publications Limited, Londres, GB
Japanese Patent Gasette, Section Ch,
Semaine E27, 18 Août 1982, Derwent Publications Limited, Londres, GB
Mat. Res. Soc. Symp. Proc., Vol 27, 1984; M.S.
DRESSELHAUS "Ion implantation of polymers" page 413 à 422**

(73) Titulaire : **VALEO VISION
17, rue Henri Gautier
F-93012 Bobigny Cédex (FR)**

(72) Inventeur : **Perrin, Pierre
8, Avenue de Québec
F-93150 Le Blanc-Mesnil (FR)**

(74) Mandataire : **Lemaire, Marc
VALEO Service Propriété Industrielle 30, rue
Blanqui
F-93406 Saint-Ouen Cédex (FR)**

EP 0 365 386 B1

## Description

La présente invention concerne un procédé pour rendre une glace réalisée en matière plastique résistante à l'abrasion, et une glace obtenue par un tel procédé.

On connaît en particulier dans le domaine automobile, l'intérêt de réaliser des glaces transparentes en matière plastique plutôt qu'en verre pour réaliser des gains de poids et, s'agissant de glaces de projecteur, pour réaliser des formes compliquées, telles que courbures, stries, avec une grande précision. Mais les matières plastiques utilisées, polycarbonate, polyméthymétacrylate entre autres, présentent une résistance à l'abrasion beaucoup plus faible que le verre.

Aussi, pour rendre les glaces utilisables durablement, est-on obligé de prévoir un revêtement protecteur sur la surface externe de celles-ci.

Le brevet FR-A-2.332.313 décrit des revêtements protecteurs résistants à l'abrasion pour surfaces de matières plastiques réalisés par polymérisation par plasma de composés organo-silanes.

Le brevet US-A-4.137.365 prévoit de traiter ensuite à l'oxygène, également par plasma, de tels revêtements, de manière à leur donner en surface une composition, et partant une dureté, s'approchant de celle de la silice.

Mais, il en résulte une discontinuité dans la composition et surtout dans les caractéristiques physiques dans l'épaisseur de la glace plastique revêtue. En particulier, la grande différence entre le coefficient de dilatation entre la couche durcissante du revêtement, et la matière thermo-plastique formant la glace, est la source de craquellements au niveau de l'interface lors des variations de température comme cela peut être le cas dans les glaces de projecteurs soumises habituellement à un échauffement important.

Le brevet EP-A-0.177.517 propose pour pallier cet inconvénient, un procédé permettant d'obtenir un revêtement protecteur de glace de dureté croissante de l'intérieur vers l'extérieur.

Mais le procédé de ce brevet, outre qu'il est difficile à mettre en oeuvre et qu'il nécessite un soin particulier et délicat dans le dosage de la progressivité du durcissement du revêtement protecteur, nécessite pour que cette progressivité permette d'atteindre le résultat escompté, que l'épaisseur du revêtement protecteur ait une valeur importante, ce qui rend le procédé peu économique.

Le brevet US-A-4.743.493 propose d'implanter des ions au sein d'une couche superficielle d'une glace plastique, au moyen d'un bombardement ionique réalisé avec des espèces chimiquement actives telles que des ions aluminium, magnésium, silicium, titanium, yttrium, fluor ou chlore de manière à provoquer des réactions chimiques avec la matière plastique de la glace conduisant à la formation d'oxydes tels que oxyde d'aluminium, de magnésium, de titane, d'yttrium, de silicium ou à des composés fluorocarbonés ou chlorocarbonés qui présentent des caractéristiques améliorant la résistance de la glace aux agressions mécaniques ou chimiques.

Mais un tel procédé qui conduit à genérer in-situ la substance durcissante par réaction chimique conduit à une dégradation locale de la matière plastique amplifiée par des échauffements causés par les réactions chimiques. Il peut en résulter des inégalités de transparence au sein de la glace et des discontinuités dans la matière pouvant induire des phénomènes de craquellement comme indiqué pour d'autres procédés connus.

Il en est de même avec le procédé décrit dans la demande de brevet GB-A- 2 105 729, qui consiste à traiter la surface d'un substrat au moyen d'un plasma de faible énergie obtenu au moyen d'un générateur RF et qui présente l'inconvénient de provoquer des réactions chimiques de réticulation de la matière plastique traitée.

La présente invention a pour objet un procédé pour rendre des glaces réalisées en matière plastique résistantes à l'abrasion qui ne présente pas les inconvénients des procédés connus.

Le procédé selon l'invention est caractérisé en ce qu'il consiste à déposer sur la glace une substance durcissante chimiquement inerte vis-à-vis de la matière plastique de la glace et à la faire pénétrer à l'intérieur de cette dernière par bombardement ionique réalisé au moyen d'un canon à ions, avec des ions d'un composé chimiquement inerte vis-à-vis de la matière plastique de la glace et de la substance durcissante.

De la sorte les ions bombardés ne réagissent pas chimiquement avec la substance durcissante et avec la matière de la glace. Avantageusement, le bombardement ionique est réalisé avec des ions Argon.

L'invention consiste donc essentiellement à utiliser l'énergie cinétique des ions bombardés pour faire pénétrer la substance durcissante à l'intérieur de la glace.

Cette pénétration est avantageusement contrôlée en agissant sur les paramètres du bombardement ionique tel que intensité, vitesse, ce qui représente un avantage important qu'on ne trouve pas dans le procédé du brevet US-A-4.743.493 en raison du fait qu'il est difficile de contrôler les réactions chimiques au sein de la glace.

L'utilisation d'ions argon, ou plus généralement d'ions formés à partir d'un gaz inerte dans les conditions opératoires, présente l'avantage que lorsque ces derniers retrouvent leur charge électronique ils reforment des atomes d'argon, à l'état de gaz qui compte tenu des basses pressions regnant dans l'enceinte où s'effectue le bombardement ionique, sont évacués vers l'extérieur et ne restent donc pas au sein de la glace.

La substance durcissante est déposée sur la glace par pulvérisation ou réaction sous vide.

Selon une variante, on fait pénétrer la substance durcissante dnas la glace par l'évaporation de ladite substance assistée simultanément par le bombardement ionique.

De préférence pour que le procédé donne de meilleurs résultats, la matière plastique qui compose la glace est choisie parmi le groupe formé par le polyméthylmétacrylate, ou ses dérivés et la substance durcissante est choisie parmi le groupe formé par la silice, l'alumine ou l'oxyde de zirconium et les mélanges et alliages de ces composants.

On obtient par le procédé selon l'invention une imbrication, à la manière d'un alliage, de la substance durcissante dans la matière plastique de la glace. La proportion de substance durcissante décroit de l'extérieur vers l'intérieur créant une évolution progressive des caractéristiques physiques en particulier du coefficient de dilatation, ce qui permet d'obtenir une bonne tenue de la glace lors des variations de température de toute nature.

La description qui va suivre en regard des dessins annexés fera mieux comprendre comment l'invention peut être réalisée, dessins sur lesquels :
- la figure 1 est une coupe longitudinale simplifiée d'un projecteur de véhicule automobile;
- la figure 2 est une vue frontale de la glace du projecteur de la figure 1 montrant particulièrement différentes zones munies de stries;
- la figure 3 est une représentation schématique de l'installation de durcissement pour la mise en oeuvre du procédé conforme à l'invention;
- les figures 4, 5 et 6 montrent schématiquement une portion de la glace soumise aux phases successives d'un cycle de durcissement par le procédé conforme à l'invention;
- la figure 7 est une représentation schématique d'une variante de l'installation de durcissement;
- la figure 8 représente schématiquement, une portion de la glace soumise à un cycle de durcissement mis en oeuvre par l'installation de la figure 7, selon une variante du procédé conforme à l'invention.

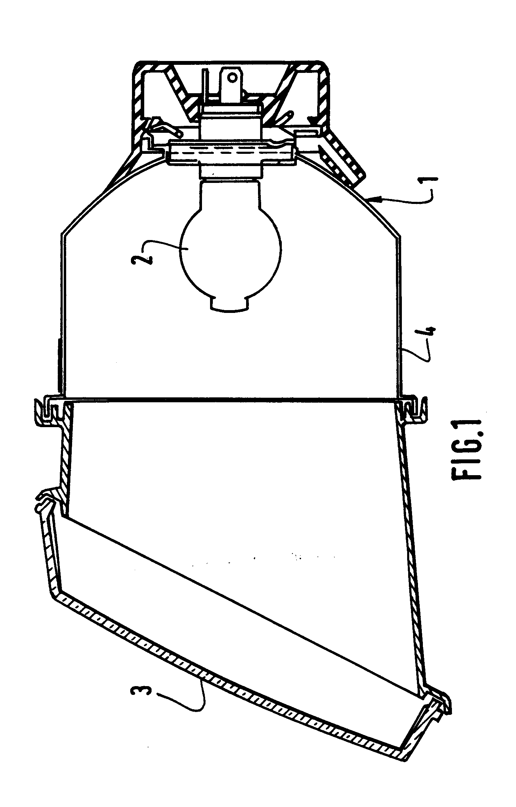

Un projecteur, comme représenté à la figure 1, comprend un réflecteur 1 supportant une lampe 2, une glace avant 3 et, entre les deux, une pièce intermédiaire ou entretoise 4.

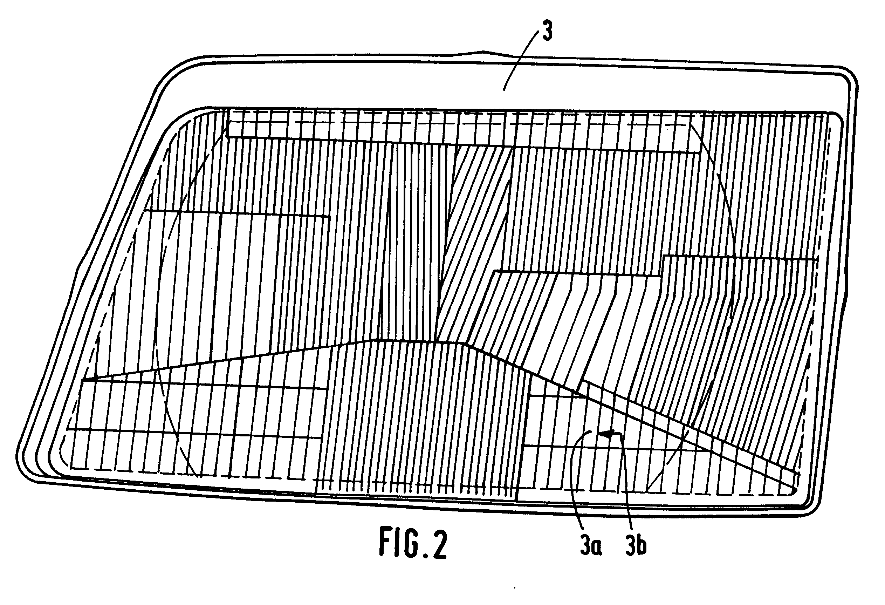

La glace 3, comme représentée sur la figure 2, comporte sur sa face frontale interne différentes zones 3 munies de stries 3a,3b, lesquelles sont de sections prismatiques ou non prismatiques qui font converger ou diverger les rayons lumineux émis par la lampe 2, suivant qu'on désire des concentrations de lumière dans une certaine partie du champ et des diminutions dans d'autres parties.

On comprendre que l'obtention d'une telle glace en verre s'avère très difficile tant par sa forme que dans la précision des stries.

Ces difficultés sont maintenant surmontées grâce à la réalisation de ces glaces en matière plastique, auxquelles on a fait subir un traitement de durcissement tel que celui du procédé conforme à l'invention qui sera décrit ci-après.

La matière plastique des glaces est avantageusement choisie parmi le groupe formé par le polycarbonate, le polyméthylmétacrylate, et leurs dérivés.

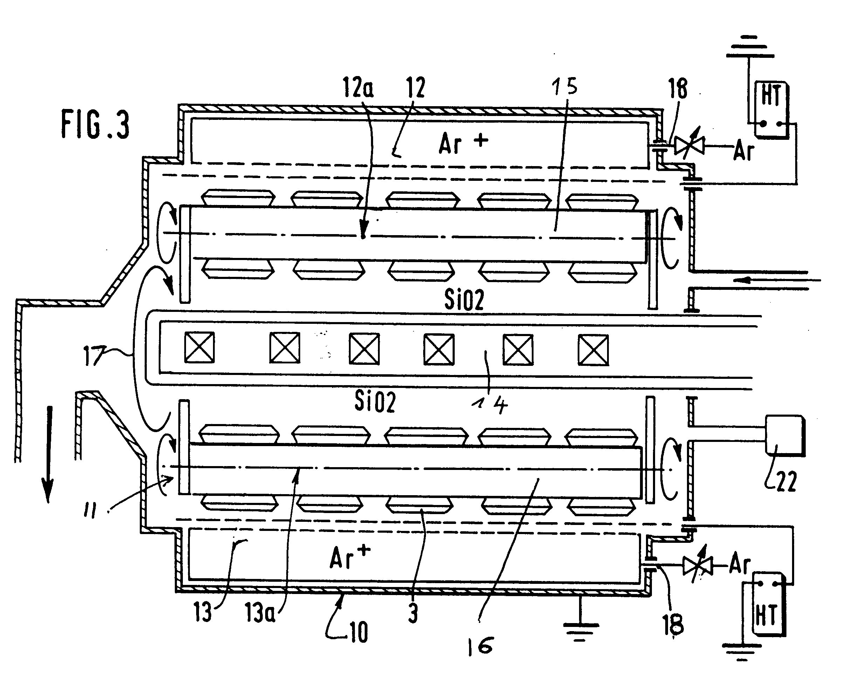

Une première installation pour la mise en oeuvre du procédé est représentée de manière simplifiée sur la figure 3. Elle comporte essentiellement une enceinte 10 raccordée à une pompe à vide (non représentée), un suport de glaces à traiter 11, des canons à ions argon de conception connue 12 et 13 disposés dans l'enceinte, accolés à la paroi interne de celle-ci et un magnétron cylindrique 14 pour la pulvérisation de la substance durcissante sur lesdites glaces 3.

Le support 11 est de manière connu constitué de plusieurs éléments 15,16 montés en satellites et sur lesquels sont disposés les glaces 3, les surfaces à traiter vers l'extérieur. Les éléments 15,16 tournent sur eux-mêmes et autour d'un axe équidistant auxdits éléments et symbolisé par la flèche 17.

Les différentes pressions devant régner dans l'enceinte au cours de la mise enoeuvre du procédé sont contrôlées par un dispositif de pression 22.

L'enceinte 10 peut recevoir l'argon et au besoin de l'oxygène par une tubulure 18.

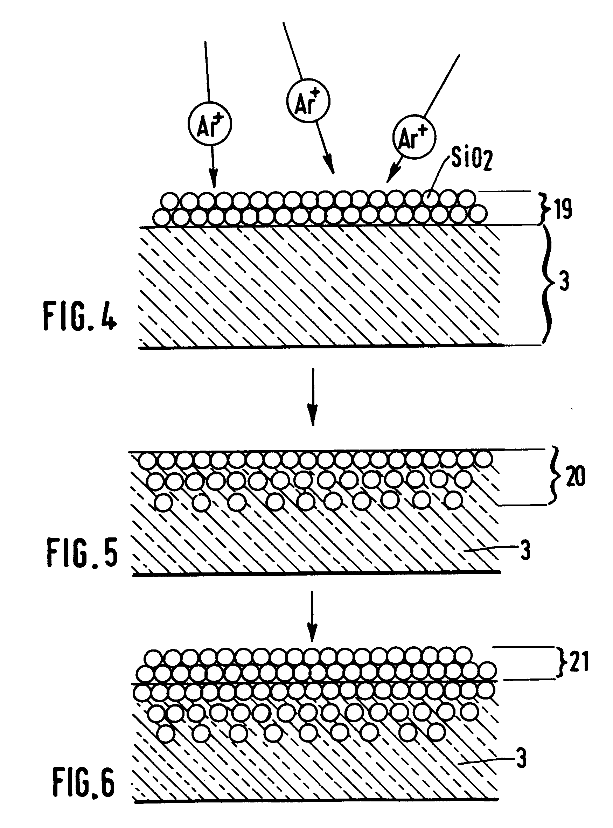

Le durcissement des glaces comprend les phases successives suivantes:
- descente en pression de la pression atmosphérique dans l'enceinte 10 à $10^{-4}$ - $10^{-5}$ mbar;
- remontée en pression sous argon a $10^{-2}$ $5.10^{-2}$ mbar avec une pression partielle d'oxygène de 4 à $6.10^{-3}$ mbar, et pulvérisation de la substance durcissante en magnétron cylindrique 14, en RF (13,56 MHz) par exemple, pour obtenir une couche 19 de substance durcissante de 500 à 5000 Å (Fig.4);
- redescente à nouveau en pression à 1 à $3.10^{-3}$ mbar et implantation de la couche 20 de substance durcissante par bombardement ionique à 100-150 KeV.

On pourra prendre comme substance durcissante, une substance choisie parmi le groupe formé par la silice, alumine ou oxyde de zirconium et mélanges et alliages de ces composants.

Il est possible de déposer sur la glace ainsi traitée une seconde couche 21 de substance durcissante. Pour cela, on redescend en pression à $10^{-4}$ - $10^{-5}$ mbar et on remonte à une pression sous argon à 1 à $3.10^{-2}$ mbar avec une pression partielle d'oxygène de 4 à $6.10^{-3}$ mbar, après quoi, on pulvérise la substance durcissante pour obtenir une couche 20 de 0,5 à 5 μm d'épaisseur (Fig.6).

Le cycle terminé, l'enceinte est remise à la pression atmosphérique.

On prévoit la mise en oeuvre de moyens de modulation des caractéristiques des canons à ions qui permettent de faire varier la pénétration de la substance durcissante dans la matière plastique de la glace.

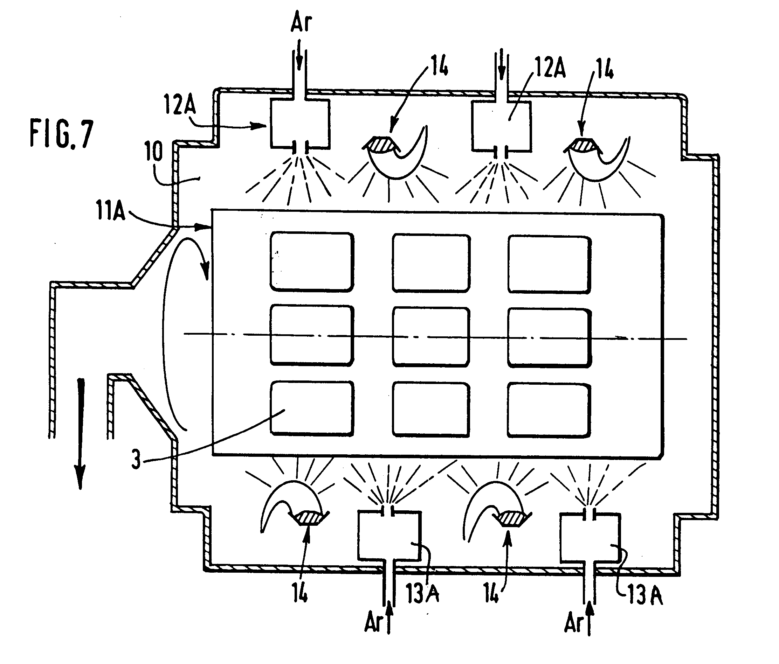

L'installation représentée sur la figure 7 varie de celle qui est décrite précédemment en ce que le support de glace de projecteur se présente sous la forme d'un tambour rotatif 11A et que l'on dispose outre des canons à ions 12A,13A de canons à électrons 14 qui évaporent la substance durcissante de l'enceinte 10 de l'installation.

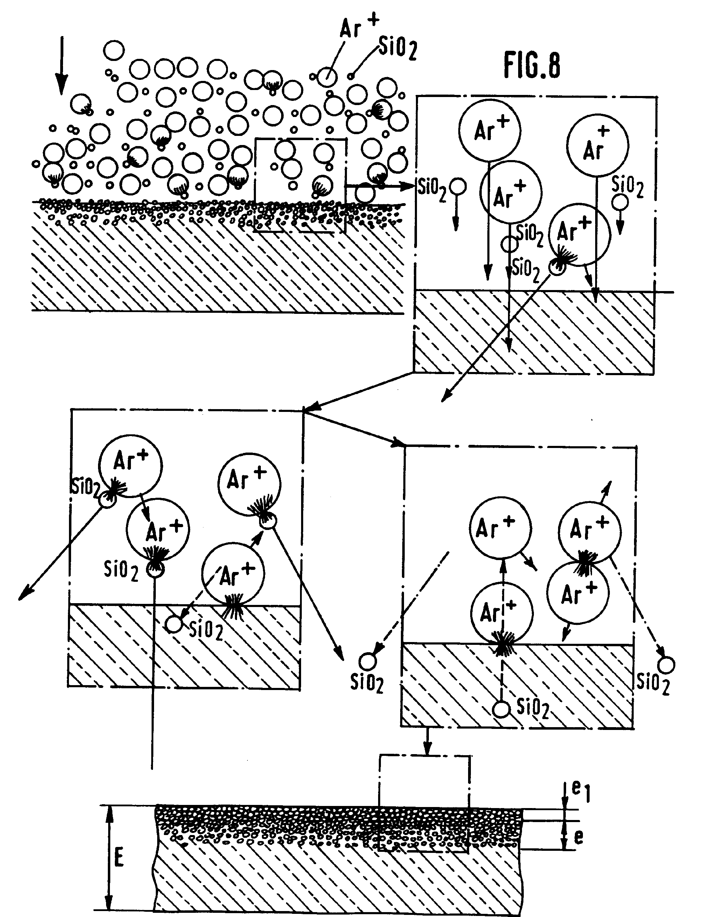

La figure 8 montre schématiquement un cycle de durcissement des glaces plastiques obtenu par l'application dans cette dernière installation de la variante du procédé conforme à l'invention dont les phases successives sont les suivantes:

- Après une descente en pression de l'enceinte, de la pression atmosphérique à $10^{-4}$ - $10^{-5}$mbar, on remonte en pression sous argon à $10^{-2}$ - $5.10^{-2}$mbar.

- On effectue ensuite une nouvelle descente en vide à $10^{-4}$ - $10^{-5}$mbar.

- Simultanément, on opère l'évaporation de la substance durcissante (Si 02) que l'on bombarde aux canons à ions argon (0,5 à 5 Kev).

A l'intérieur de l'enceinte, les masses et les vecteurs vitesse des ions argon $Ar^+$ et des particules de silice évaporées, étant différents, les ions argon $Ar^+$ qui sont plus lourds et bien accélérés ont une énergie cinétique plus forte que les particules de silice. Il en résulte des chocs des ions contre les particules de silice qui font que l'énergie cinétique développée par lesdits ions est transmise aux particules de substance durcissante qui pénètrent alors plus ou moins profondément dans l'épaisseur E de la glace plastique selon les impacts et les trajectoires qui leurs sont données.

On aboutit, comme le montre les dernières vues du processus représenté sur la figure 8 au dépôt dans l'épaisseur E de la glace d'une couche de transition e dans laquelle les particules de silice sont plus ou moins espacées suivie d'une couche dure el de surface, e + el étant sensiblement égale à 0,5 à 5 μm.

Au lieu d'utiliser des ions argon, on peut utiliser toutes autres types d'ions ne réagissant pas chimiquement avec la matière de la glace.

L'une des particularités de l'invention est donc d'utiliser les ions uniquement pour leur énergie cinétique et pour entrainer une matière durcissante à pénétrer dans la matière plastique de la glace.

Une autre particularité est de déposer sur la glace une matière durcissante sous sa forme définitive, c'est-à-dire sans qu'il soit besoin de lui faire subir un traitement chimique pour lui conférer ses caractéristiques de résistances mécanique et chimique.

**Revendications**

1. Procédé pour rendre une glace en matière plastique résistante à l'abrasion à l'aide d'une substance durcissante, caractérisé en ce qu'il consiste à y déposer une substance durcissante chimiquement inerte vis-à-vis de la matière plastique de la glace et à la faire pénétrer à l'intérieur de cette dernière par bombardement ionique réalisé au moyen d'un canon à ions, avec des ions d'un composé chimiquement inerte vis-à-vis de la matière plastique de la glace et de la substance durcissante.

2. Procédé selon la revendication 1, caractérisé en ce que ledit bombardement ionique est réalisé avec des ions argon (Ar+).

3. Procédé selon la revendication 1 ou 2, caractérisé en ce que ladite substance durcissante est déposée sur la glace, par pulvérisation cathodique ou par réaction sous vide, avant ledit bombardement ionique.

4. Procédé selon la revendication 1 ou 2, caractérisé en ce que ladite substance durcissante est amenée sur la glace par évaporation et en ce qu'elle subit simultanément un bombardement ionique.

5. Procédé selon la revendication 4, caractérisé en ce que l'évaporation de la substance durcissante est réalisée au canon à électrons.

6. Glace obtenue par le procédé selon l'une quelconque des revendications précédentes, caractérisée en ce que la matière plastique qui compose la glace est choisie parmi le groupe formé par le polyméthylmétacrylate et ses dérivés, et en ce que la substance durcissante est choisie parmi le groupe formé par la silice, l'alumine, l'oxyde de zirconium et les mélanges et alliages de ces composants.

7. Glace selon la revendication 6, caractérisée en ce qu'une deuxième couche de substance durcissante est rapportée sur la première.

**Patentansprüche**

1. Verfahren, um ein Kunststoffglas mit Hilfe einer Härtersubstanz reibungsfest zu machen, **dadurch gekennzeichnet**, daß dabei auf die Scheibe eine Härtersubstanz aufgetragen wird, die gegenüber dem Kunststoff der Scheibe chemisch inert ist, und daß die Substanz durch Ionenbeschuß zum Eindringen in die genannte Scheibe veranlaßt wird, wobei die Durchführung mittels einer Ionenkanone mit Ionen aus einer Verbindung erfolgt, die gegenüber dem Kunststoff der Scheibe und der Härtersubstanz chemisch inert ist.

2. Verfahren nach Anspruch 1, **dadurch gekennzeichnet**, daß der genannte Ionenbeschuß mit Argonionen (Ar$^+$) stattfindet.

3. Verfahren nach Anspruch 1 oder 2, **dadurch gekennzeichnet**, daß die gennante Härtersubstanz auf der Scheibe durch Kathodenzerstäubung oder durch Vakuumreaktion vor dem genannten Ionenbeschuß aufgetragen wird.

4. Verfahren nach Anspruch 1 oder 2, **dadurch gekennzeichnet**, daß die genannte Härtersubstanz durch Verdampfung auf die Scheibe aufgebracht wird und daß sie gleichzeitig Gegenstand eines Ionenbeschusses ist.

5. Verfahren nach Anspruch 4, **dadurch gekennzeichnet**, daß die Verdampfung der Härtersubstanz mit der Elektronenkanone erfolgt.

6. Mittels des Verfahrens nach einem der vorherigen Ansprüche hergestelltes Glas, **dadurch gekennzeichnet**, daß das Kunststoff, woraus das Glas besteht, aus der Gruppe von Polymethylmetacrylat und seinen Derivaten ausgewählt wird und daß die Härtersubstanz aus der Gruppe, bestehend aus Silicium, Aluminiumoxid, Zirkonoxid und den Mischungen und Legierungen aus diesen Bestandteilen, ausgewählt wird.

7. Glas nach Anspruch 6, **dadurch gekennzeichnet**, daß eine zweite Härtersubstanzschicht auf die erste aufgebracht wird.

**Claims**

1. A process for rendering a translucent element of plastics material resistant to abrasion by the use of a hardening material, characterised in that it comprises depositing on it a hardening material which is chemically inert with respect to the plastics material of the translucent element, and causing the hardening material to penetrate into the interior of the latter by ionic bombardment, carried out by means of an ion gun with ions of a composition that is chemically inert with respect to both the plastics material of the translucent element and the hardening material.

2. A process according to Claim 1, characterised in that the said ionic bombardment is carried out with argon (Ar+) ions.

3. A process according to Claim 1 or Claim 2, characterised in that the said hardening material is deposited on the translucent element by cathodic spraying or by reaction in a vacuum, prior to the said ionic bombardment.

4. A process according to Claim 1 or Claim 2, characterised in that the said hardening material is applied on the translucent element by evaporation, and in that the latter simultaneously undergoes ionic bombardment.

5. A process according to Claim 4, characterised in that the evaporation of the hardening material is obtained by means of an electron gun.

6. A translucent element obtained by the process in accordance with any one of the preceding Claims, characterised in that the plastics material that constitutes the translucent element is selected from the group consisting of polymethylmetacrylate and its derivatives, and in that the hardening material is selected from the group consisting of silica, alumina, zirconium oxide, and mixtures and compounds of these constituents.

7. A translucent element according to Claim 6, characterised in that a second layer of hardening material is overlaid on the first.

FIG.1

FIG.2

3

3a 3b

EP 0 365 386 B1

FIG.3

FIG. 4

FIG. 5

FIG. 6

FIG.7

FIG.8